# EUROPEAN PATENT SPECIFICATION

(11) **EP 1 932 697 B1**
(45) Date of publication and mention of the grant of the patent: **02.03.2011**
(21) Application number: 07123254.0
(22) Date of filing: 14.12.2007
(51) Int. Cl.: B60H 1/00, B60H 1/32, B61D 27/00

(54) **Air-conditioning device for a transport vehicle, and corresponding transport vehicle**
Klimaanlage für ein Transportfahrzeug und entsprechendes Transportfahrzeug
Dispositif de climatisation pour véhicule de transport et véhicule de transport correspondant

(30) Priority: 14.12.2006 FR 0610910
(43) Date of publication of application: 18.06.2008
(73) Proprietor: Iveco France S.A., 69200 Vénissieux (FR)
(72) Inventor: Belkouche, Yazid Yaniss, 69008 Lyon (FR)
(74) Representative: Borsano, Corrado

(56) References cited:
- EP-A- 0 488 553
- WO-A-2005/108133
- DE-A1- 19 625 925
- DE-A1- 19 937 949
- DE-C1- 19 524 660

## Description

The present invention relates to an air conditioning device for a transport vehicle, in addition to a transport vehicle equipped with said air conditioning device.

The invention is aimed particularly, but not solely, at transport vehicles whose route involves at least one station stop, during which people are likely to board the vehicle, and also to alight from it. According to the invention, said vehicle could be driven in a dedicated lane, in particular by means of electric wires, of rails or even by optic means.

This type of transport vehicle typically includes a chassis mounted on at least one axle supporting bearing devices, which are usually wheels having rubber tyres. In these conditions, transport vehicles in the sense of the invention include in particular, but not exclusively, buses, trolleybuses or streetcars. However, the invention could also be applied to transport vehicles of the coach variety.

Usually, the air-conditioning device equipping said vehicles includes a compressor, from which extends a tubular duct in the form of a loop, in which a refrigerant circulates. Said refrigerant passes through, in sequence, a condensation stage, then an evaporation stage, in which it supplies the frigories, that 's the amount of refrigerant necessary to cool the air in the vehicle. An example of known air conditioning device is disclosed in the patent application DE 196 25 925. In this solution the air-conditioning device comprises a main loop equipping with a condensation and an evaporation stage for supplied the frigories to a distribution network. This latter supplies and manage, in an independent way, a plurality of secondary loops each of which for conditioning air addressed to compartments of the vehicle.

However, this known solution has certain disadvantages.

Indeed, it is dissatisfactory in ecological terms, since it uses a large amount of refrigerant. This is due to the fact that the aforementioned tubular duct is of a considerable size, given that it extends roughly along the entire length of the vehicle, so as to air-condition the various areas of the latter. Lastly, this solution induces a considerable over-consumption of energy, since it involves a substantial increase in fuel consumption.

The above having been specified, this invention aims to provide a solution to these various disadvantages.

For this purpose, it has as its object an air-conditioning device for a transport vehicle, specifically of the bus, trolleybus, streetcar or coach variety, comprising:
- a main cooling zone which includes a compressor, a main loop conveying a main refrigerant, as well as a condensation stage and an evaporation stage which said main loop passes through; and
- an auxiliary loop conveying an auxiliary fluid, which exchanges heat, on one side with the principle loop, and on the other side with the air in the passenger compartment of the vehicle being air-conditioned;
- the auxiliary loop is connected to a tank of cold auxiliary refrigerant, maintained at a temperature of between 5 and 10°C.

According to further characteristics of the invention:
- the auxiliary loop exchanges heat with the main loop in a primary heat exchanger belonging to the evaporation stage of the main zone;
- the auxiliary loop exchanges heat with the passenger compartment of the vehicle in at least one second heat exchanger, equipping at least one diffuser placed on the body of the vehicle;
- the auxiliary refrigerant is water which may contain added chemicals, specifically glycol;
- the main refrigerant is R410A;
- the or each diffuser includes an inlet for air to be conditioned, said heat exchanger, a ventilator, a diffusion grating to let the conditioned air into the passenger compartment, as well as a grating towards the exterior of the vehicle allowing external fresh air entering and internal air to be extracted from the vehicle.

A further object of this invention is a transport vehicle, specifically a bus, trolleybus, streetcar or coach, including a chassis mounted on at least one axle connected to bearing devices, specifically wheels having rubber tyres, as well as an air-conditioning advice such as that described above.

According to further characteristics of the invention:
- the main cooling zone of cooling production is placed to the rear of the vehicle;
- the auxiliary loop extends roughly along the entire length of said transport vehicle;
- the auxiliary refrigerant tank is placed to the rear of the vehicle;
- the diffusers are distributed at regular distances along the length of the transport vehicle;
- the compressor in the main cooling zone is built into the engine of the vehicle.

The invention will be better understood and other advantages of said invention will become clearer in the light of the following description of a method of realisation of a transport vehicle according to its principle, given purely by way of non-limiting example and with reference to the annexed drawings, in which:

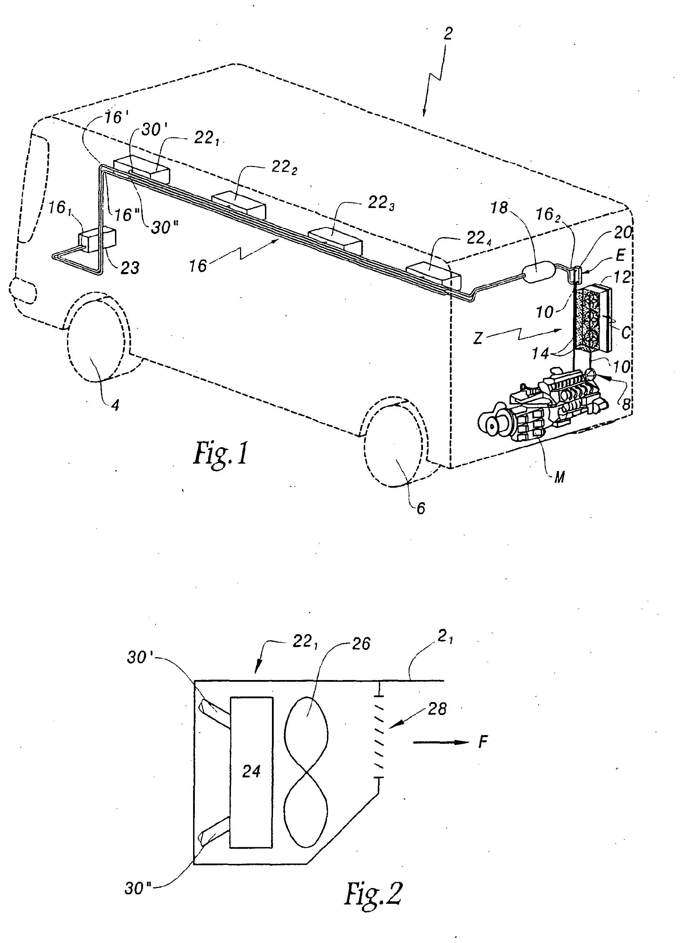

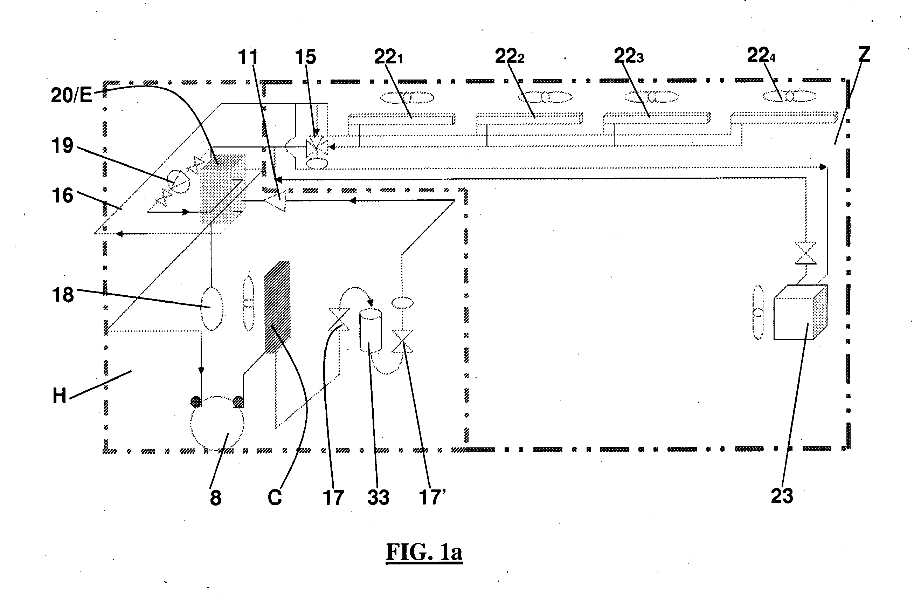

- figure 1 is a perspective view, schematically illustrating a transport vehicle, as well as an air-conditioning device according to the invention, equipping said vehicle;
- figure 1 a is a more detailed schematic diagram of the air conditioning system shown in fig. 1; and
- figure 2 is a cross-section view, illustrating an air diffuser equipping the transport vehicle shown in figure 1.

The same reference numerals and letters in the figures designate the same or functionally equivalent parts.

The transport vehicle shown in figure 1, which is for example a bus, trolleybus, streetcar or coach, is generally known to include a body 2, which is shown schematically in chain dotted lines. Said body is typically mounted on two axles, front and rear respectively, which are equipped with bearing devices. In the example illustrated, said bearing devices are wheels mounted on rubber tyres, marked respectively with numbers 4 and 6 denoting the front and rear wheels. Thus, in figure 1, the front part of the transport vehicle is shown on the left side of the drawing, while the rear part is shown on the right.

The air-conditioning advice equipping said transport vehicle includes firstly a compressor 8, of a known variety. Said compressor is placed at the rear of the vehicle, as it is built-in to the motor of the vehicle, marked M and shown schematically. A tubular duct in the form of a loop 10, in which the so-called main refrigerant flows, extends out from the compressor 8, in the rear part of the transport vehicle only.

Said loop 10 extends firstly through a condensation stage C, which typically includes a heat exchanger 12 and some ventilators 14. Furthermore, said loop 10 extends through an evaporation stage E, which specifically includes a heat exchanger 20.

These various mechanical and thermodynamic elements are of a known variety, hence they are described briefly above. The compressor 8, the loop 10, as well as the stages of respectively condensation C and evaporation E, form a main cooling zone Z, placed to the rear of the vehicle.

The air-conditioning device according to this invention also comprises an auxiliary loop 16, in which an auxiliary refrigerant flows, such as water with added chemicals, specifically glycol water. For this purpose, this loop is for example equipped with a circulation pump, which is not illustrated. Said auxiliary loop generally extends lengthways between the front and the rear of the transport vehicle. Note, therefore, 16₁ its front end and 16₂ its back end.

Said back end 16₂ is connected with a tank 18, wherein a small quantity of auxiliary refrigerant is stored at a low temperature, for example between 5 and 10°C. Said tank is for example housed in the engine compartment of the vehicle.

Furthermore, said back end 16₂ exchanges heat with the main loop 10, within the heat exchanger 20 belonging to the evaporation stage E. In its middle section, the auxiliary loop 16 exchanges heat with the diffusers on the roof, of which in this case there are four, and which are numbered with references 22₁ to 22₄. Lastly, at its front end 16₁, the loop 16 exchanges heat with a supplementary diffuser 23, of a known variety, which is built in to the dashboard of the vehicle.

In figure 1a, in addition to the elements already shown in fig. 1, it is shown a tank for refrigerant 33, with valves 17, 17', a refrigerant injector 11, to the heat exchanger 20/E, the circulation pipe loop 16 between the roof diffusers 22 and the heat exchanger 20 through a regulation unit 15 for the internal of the vehicle and valves 19. The dotted line Z shows the part in zone of coolant production, while the dotted line H shows the part in the internal of the vehicle.

Figure 2 illustrates more precisely one 22₁ of the roof diffusers, it being understood that the three others have an identical structure. Said diffuser 22₁, which is arranged in the upper part 2₁ of the body 2 of the vehicle, includes an air inlet which is not shown, a heat exchanger 24 of the auxiliary refrigerant/air variety, a ventilator 26 as well as a diffusion grating 28. Moreover, the two branches 16' and 16" of the loop 16, numbered in figure 1, are equipped with bypasses numbered respectively 30' and 30",which penetrate into the exchanger 24. The use of the air-conditioning device according to this invention, as described above, shall now be described in detail below.

In operation, the main loop 10 supplies frigories in the classic manner, downstream of the condensation stage C. However, contrary to the usual solutions, said frigories are not delivered directly to the air in the vehicle's passenger compartment, instead they are yielded, in the heat exchanger 20, to the auxiliary refrigerant circulating in the loop 16.

Said auxiliary refrigerant then conveys said frigories in the direction of the various diffusers 22₁ to 22₄, where they are then yielded to the air of the passenger vehicle through the heat exchangers 24. The flow of air conditioned in this way, towards the interior of the passenger compartment, is represented by arrow F in figure 2.

The invention allows the previously mentioned objectives to be reached.

Indeed, it presents a substantial advantage with respect to previous solutions, in ecological terms. In fact, the main refrigerating loop 10 conveys a fluid that could potentially contribute considerably to the greenhouse effect and also be slightly flammable or toxic.

Whereas, in this invention, said loop 10 is of a length considerably shorter than that in the prior art, given that it only extends along the rear section of the vehicle. In such conditions, the supply of frigories along the vehicle is ensured by the auxiliary refrigerant, which is likely to have much superior ecological properties, especially if it is water-based.

The invention is also advantageous, in relation to the prior art, in terms of thermic inertia. Indeed, in the state of the art which uses a single cooling loop, the engine stop provokes a stop in the production of conditioned air after a very short period, in the region of a few seconds. Whereas, thanks to this invention, the presence of the very long auxiliary loop, connected to a reserve of cold refrigerant, guarantees that the air is conditioned for a longer duration, of around one minute.

Lastly, note that most of prior solutions employ a refrigerant named R134A. According to a characteristic of the invention, the refrigerant circulating in the main loop 10 is R410A, of a known variety, which has distinctly superior thermodynamic properties. In these conditions, efficiency is improved, consequently allowing the vehicle to consume less fuel.

## Claims

1. Air-conditioning device for transport vehicle, specifically of the bus, trolleybus, streetcar or coach variety, comprising a main cooling zone (Z) which includes a compressor (8), a main loop (10) conveying a main refrigerant, as well as a condensation stage (C) and an evaporation stage (E) crossed by said main loop (10) and auxiliary loop (16) conveying an auxiliary refrigerant, said auxiliary loop exchanging heat, on one side with the main loop (10) and on the other with the air to be conditioned in the vehicle's passenger compartment; *the device being **characterized in that*** said auxiliary loop (16) is connected with a tank (18) of cold auxiliary refrigerant, maintained at a temperature of between 5 and 10°C.

2. Air-conditioning device according to claim 1, **characterised in that** said main refrigerant is R410A.

3. Transport vehicle, specifically a bus, trolleybus, streetcar or coach, comprising a body (2) supported by at least one axle connected to bearing devices, specifically wheels (4, 6) mounted on rubber tyres, as well as an air-conditioning device according to any one of the previous claims.

## Patentansprüche

1. Klimaanlageneinrichtung für ein Transportfahrzeug, insbesondere vom Bus-, Trolleybus-, Straßenbahn- oder Reisebustyp, umfassend eine Hauptkühlzone (Z) mit einem Kompressor (8), einer Hauptschleife (10), die ein Hauptkühlmittel liefert, sowie einer Kondensationsstufe (C) und einer Verdampfungsstufe (E), die von der Hauptschleife (10) gekreuzt wird, und eine Zusatzschleife (16), die ein Zusatzkühlmittel liefert, wobei die Zusatzschleife Wärme auf einer Seite mit der Hauptschleife (10) und auf der anderen mit der zu konditionierenden Luft in dem Fahrgastraum des Fahrzeugs austauscht; wobei die Einrichtung
**dadurch gekennzeichnet ist, dass** die Zusatzschleife (16) mit einem Behälter (18) mit kaltem Zusatzkühlmittel verbunden ist, das auf einer Temperatur zwischen 5 und 10°C gehalten wird.

2. Klimaanlageneinrichtung nach Anspruch 1,
**dadurch gekennzeichnet, dass** das Hauptkühlmittel R410A ist.

3. Transportfahrzeug, insbesondere ein Bus, ein Trolleybus, eine Straßenbahn oder ein Reisebus, umfassend eine Karosserie (2), die durch mindestens eine Achse getragen ist, die mit Lagereinrichtungen, insbesondere Rädern (4, 6), verbunden ist, an denen Gummireifen angebracht sind, sowie eine Klimaanlageneinrichtung nach einem der vorherigen Ansprüche.

## Revendications

1. Dispositif de climatisation pour un véhicule de transport, en particulier d'un bus, d'un trolleybus, d'un tramway ou d'une certaine variété de voitures ferroviaires, comprenant une zone de refroidissement principale (Z) qui comprend un compresseur (8), une boucle principale (10) transportant un réfrigérant principal, ainsi qu'un étage de condensation (C) et un étage d'évaporation (E) traversés par ladite boucle principale (10) et une boucle auxiliaire (16) transportant un réfrigérant auxiliaire, ladite boucle auxiliaire échangeant la chaleur, d'un côté avec la boucle principale (10) et de l'autre avec l'air à climatiser dans le compartiment de passagers du véhicule ; le dispositif étant **caractérisé en ce que** ladite boucle auxiliaire (16) est raccordée avec un réservoir (18) de réfrigérant auxiliaire froid, maintenu à une température comprise entre 5 et 10 °C.

2. Dispositif de climatisation selon la revendication 1, **caractérisé en ce que** ledit réfrigérant principal est le R410A.

3. Véhicule de transport, en particulier un bus, un trolleybus, un tramway ou une voiture ferroviaire, comprenant un corps (2) supporté par au moins un essieu raccordé à des dispositifs de support, en particulier des roues (4, 6) montées sur des bandages pneumatiques en caoutchouc, ainsi qu'un dispositif de climatisation sur l'une quelconque des revendications précédentes.
